# EUROPÄISCHE PATENTSCHRIFT

(11) **EP 3 117 128 B1**
(45) Veröffentlichungstag und Bekanntmachung des Hinweises auf die Patenterteilung: **10.04.2019**
(21) Anmeldenummer: 15711096.6
(22) Anmeldetag: 11.03.2015
(51) Int. Cl.: F24F 11/30, F16K 17/38, F16K 31/05, A62C 2/24

(54) **BLOCKIERVORRICHTUNG FÜR KLAPPENANTRIEB**
BLOCKING DEVICE FOR A DAMPER DRIVE
DISPOSITIF DE BLOCAGE POUR UN ENTRAÎNEMENT DE CLAPET

(30) Priorität: 12.03.2014 CH 366142014
(43) Veröffentlichungstag der Anmeldung: 18.01.2017
(73) Patentinhaber: Belimo Holding AG, 8340 Hinwil (CH)
(72) Erfinder: WEBER, Beat, CH-8050 Zürich (CH); DREHER, Peter, CH-8706 Meilen (CH); BEKER, Atilla, CH-8620 Wetzikon (CH)
(74) Vertreter: Rentsch Partner AG
(86) Internationale Anmeldenummer: PCT/EP2015/055072
(87) Internationale Veröffentlichungsnummer: WO 2015/135988

(56) Entgegenhaltungen:
- EP-A1- 0 118 230
- WO-A1-01/50049
- DE-A1- 3 126 214
- US-A- 4 310 012

## Beschreibung

Die vorliegende Erfindung betrifft eine Blockiervorrichtung für einen Klappenantrieb, einen Klappenantrieb, eine Brandschutzeinrichtung sowie ein Verfahren zum Betrieb eines Klappenantriebs. Die vorliegende Erfindung betrifft insbesondere eine Blockiervorrichtung für einen Klappenantrieb, welche eingerichtet ist, den Klappenantrieb in einem Brandfall bei Überschreiten einer Blockiertemperatur in einer Blockierstellung zu arretieren bzw. zu blockieren.

### Stand der Technik

Klappenantriebe werden in einer Brandschutzeinrichtung zum Antrieb von Klappen, insbesondere von Brandschutzklappen, eingesetzt.

Brandschutzklappen werden in Gebäuden zur Verhinderung einer Brand- und Rauchübertragung in Lüftungskanäle eingebaut, beispielsweise in Wände und Decken zwischen Gebäudeabschnitten. In der Funktion als Rauch- und Brandsperre ist die Brandschutzklappe im Normalbetrieb in der Normalstellung geöffnet, um den Luftdurchlass im Lüftungskanal zu ermöglichen, und im Brandfall in der Sicherheitsstellung geschlossen, um die Brand- und Rauchübertragung durch den Lüftungskanal zu verhindern. Je nach Lüftungs- und Entrauchungskonzept ist es jedoch umgekehrt auch möglich, eine Klappe und ihren Antrieb als Entrauchungsklappe zu konfigurieren bzw. auszulegen. Diese kann im Brandfall in einer Sicherheitsstellung geöffnet werden, um eine Entrauchung durch den Lüftungskanal zu ermöglichen. Die Brandschutzklappen und Entrauchungsklappen sind im verbauten Zustand mit einem Klappenantrieb gekoppelt, welcher sie im Brandfall von der Normalstellung in die Sicherheitsstellung bewegt. Bezüglich der Änderung der Kappenstellung bedeutet entsprechend üblichem Sprachgebrauch "Bewegen" oder "Antreiben" einer Klappe ein Bewegen oder Antreiben eines zu einer Klappe gehörenden Klappenelements, welches zum Verschluss der Lüftungsleitung dient, während die Klappe insgesamt auch weitere Komponenten wie Lager, Rahmen und Montageelemente beinhalten kann.

Als Klappenantrieb wird nachfolgend von einem motorisierten Klappenantrieb mit Federrücklauf ausgegangen. Derartige Klappenantriebe sind von der BELIMO Automation AG, Zürich, Schweiz, verfügbar. Bei diesen wird eine mit der angetriebenen Brandschutzklappe gekoppelte Abtriebswelle des Klappenantriebs im Normalbetrieb durch einen elektrischen Motor gegen die Kraft einer Rücklauffeder aktiv in ihrer Normalstellung gehalten. Im Brandfall wird die Energieversorgung des Motors unterbrochen, was z. B. durch einen thermischen Auslöser, einen elektronischen Auslöser, beispielsweise einen Rauchmelder, oder eine Kombination hieraus erfolgt. Nach Unterbrechung der Motorstromversorgung wird die Abtriebswelle durch die Kraft der Rücklauffeder in die Sicherheitsstellung bewegt, wobei die Abtriebswelle mit der Rücklauffeder und dem Motor über ein Getriebe gekoppelt ist.

Die Konstruktion des Antriebs ist im Zusammenhang der vorliegenden Erfindung allerdings nicht entscheidend. Die vorliegende Erfindung kann in grundsätzlich gleicher Weise in rein motorischen Klappenantrieben ohne Federrücklauf eingesetzt werden.

Die EP 0118230 A1 offenbart einen mittels einer Drehfeder angetriebenen rotatorischen Sicherheitsantrieb für ein Ventil. Die Drehfeder wird Normalbetrieb durch aufschmelzbare Verbindungselemente in gespanntem Zustand gehalten. Oberhalb eines Schmelzpunktes schmelzen die Verbindungselemente, worauf sich die Drehfeder entspannt und so das Ventil in eine Sicherheitsstellung bewegt. In grundsätzlich ähnlicher Weise offenbart die WO 01 50049 A1 einen Drehfederantrieb für ein Überdruckventil, bei welchem die gespannte Drehfeder durch Aufschmelzen einer Schmelzsicherung freigegeben wird.

Die DE 3126214 A1 offenbart eine mittels einer Drehfeder angetriebene Absperrvorrichtung, insbesondere für Gasleitungen. Die Drehfeder wird Normalbetrieb durch einen sich unter Wärmeeinfluss deformierenden Sperrbolzen in gespanntem Zustand gehalten. Oberhalb einer Aktivierungstemperatur deformiert sich der Sperrbolzen und gibt so den Antrieb frei, worauf sich die Drehfeder entspannt und so die Absperrvorrichtung in eine Stellung bewegt, in welcher sie die Gasleitung absperrt. Der Sperrbolzen kann z. B. aus einem leicht schmelzenden Material, wie Blei bestehen oder ein Dehnstoffelement umfassen.

Die US4310012 offenbart eine Sicherheitsvorrichtung für Tankwagen, welche eine Schmelzsicherung und ein Absperrventil umfasst. Bei Überschreiten einer Schwellwerttemperatur schmilzt die Schmelzsicherung auf, so dass das Absperrventil federgetrieben geschlossen wird.

### Darstellung der Erfindung

Zur Erfüllung ihres Zweckes ist es erforderlich, dass eine Brandschutzklappe während des gesamten Brandereignisses in ihrer Sicherheitsstellung verbleibt. Vor allem bei länger andauernden Bränden ist dies aufgrund der dann herrschenden hohen Temperaturen technisch herausfordernd. Somit besteht in dieser Hinsicht ein Bedarf nach Fortbildungen bekannter Klappenantriebe, um das Sicherheitsniveau dieser Antriebe weiter zu erhöhen.

Es ist eine Aufgabe der vorliegenden Erfindung, Klappenantriebe, Brandschutzeinrichtungen und Verfahren zum Betrieb von Brandschutzeinrichtungen bereitzustellen, welche zumindest einige Nachteile der bekannten Systeme nicht aufweisen. Es ist insbesondere eine Aufgabe der vorliegenden Erfindung, Vorrichtungen und Verfahren bereitzustellen, welche insbesondere im Fall länger anhaltender Brände bzw. bei extremen Brandtemperaturen eine Brandschutzklappe in ihrer Sicherheitsstellung halten.

Gemäss der vorliegenden Erfindung werden diese Ziele insbesondere durch die Elemente der unabhängigen Ansprüche erreicht. Weitere vorteilhafte beispielhafte Ausführungsformen gehen ausserdem aus den abhängigen und nebengeordneten Ansprüchen sowie der Beschreibung hervor.

Gemäss einem ersten Aspekt werden die Ziele der vorliegenden Erfindung durch Bereitstellung einer Blockiervorrichtung für einen Klappenantrieb erreicht. Im montierten Zustand bildet die Blockiervorrichtung dabei einen Bestandteil bzw. eine Baugruppe des Klappenantriebs. Durch Aktivierung ist die Blockiervorrichtung aus einem Ruhezustand in einen alternativen aktivierten Zustand überführbar.

Die Blockiervorrichtung umfasst ein Blockierelement, wobei das Blockierelement beweglich gelagert und dadurch zwischen einer im Ruhezustand eingenommenen Freigabestellung und einer im aktivierten Zustand eingenommenen Blockierstellung bewegbar. In der Blockierstellung arretiert bzw. blockiert das Blockierelement ein Abtriebsglied des Branschutzantriebs in einer Sicherheitsstellung. In der Freigabestellung dagegen ermöglicht das Blockierelement eine Bewegung des Abtriebsglieds mittels der dem Abtriebsglied vorgelagerten Komponenten des Klappenantriebs.

Die Blockiervorrichtung umfasst ferner ein Antriebselement. Das Antriebselement ist derart gestaltet ist, dass es bei einer Aktivierung der Blockiervorrichtung das Blockierelement aus der Freigabestellung in die Blockierstellung bewegt; zu diesem Zweck stellt das Antriebselement eine Antriebskraft bereit und beaufschlagt das Blockierelement mit der Antriebskraft.

Die Blockiervorrichtung umfasst ferner ein Aktivierungselement, welches mit dem Blockierelement und dem Antriebselement wirkverbunden ist. Bei Überschreiten einer Blockiertemperatur erfolgt eine irreversible Gestaltänderung des Aktivierungselements, wodurch eine Aktivierung der Blockiervorrichtung erfolgt. Die irreversible Gestaltänderung kann insbesondere in einem vollständigen oder teilweisen Schmelzen des Aktivierungselements und damit einem Verlust seiner definierten Form bestehen. Die Gestaltänderung kann, alternativ oder zusätzlich, auch ein Verbrennen oder Verdampfen beinhalten. In jedem Fall führt die Gestaltänderung zum Versagen einer zuvor vom Aktivierungselement ausgeübten Funktion und damit zu einer Aktivierung der Blockiervorrichtung.

In einigen Ausführungsformen ist das Aktivierungselement aus thermoplastischem Kunststoff gefertigt. Ein Aktivierungselement aus thermoplastischem Kunststoff schmilzt bei einer der Blockiertemperatur entsprechenden Schmelztemperatur auf und ändert dadurch seine Gestalt. Alternativ kann das Aktivierungselement auch aus einem anderen Material, z. B. einem duroplastischen Kunststoff gefertigt sein. Wesentlich ist in diesem Zusammenhang, dass das Aktivierungselement unterhalb der Blockiertemperatur eine Funktion ausübt, welche bei bzw. nach Überschreiten der Blockiertemperatur wegfällt oder versagt.

In weiteren Ausführungsformen wird das Aktivierungselement durch eine Klebverbindung realisiert, die oberhalb der Blockiertemperatur versagt.

In einigen Ausführungsformen beaufschlagt das Antriebselement das Blockierelement im Ruhezustand mit einer in Richtung der Blockierstellung wirkenden Antriebskraft. Das Aktivierungselement hält das Blockierelement in diesem Zustand gegen die Antriebskraft in der Freigabestellung. Für eine derartige Ausführungsform wird die Blockiervorrichtung demnach stets mit der Antriebskraft beaufschlagt, welche zur Bewegung des Blockierelements aus der Freigabestellung in die Blockierstellung erforderlich ist. Im Ruhezustand wird die Antriebskraft jedoch durch eine vom Aktivierungselement ausgeübte Rückhaltekraft kompensiert bzw. aufgehoben; das Aktivierungselement übt also eine Rückhaltefunktion aus. Bedingt durch die Formänderung des Aktivierungselements bei Erreichen der Blockiertemperatur versagt die Rückhaltefunktion und die Rückhaltekraft auf das Blockierelement fällt weg. Entsprechend bewegt sich das Blockierelement aufgrund der weiterhin wirkenden Antriebskraft in die Blockierstellung.

In alternativen Ausführungsformen entkoppelt das Aktivierungselement in einem Zustand vor der Aktivierung der Blockiervorrichtung das Blockierelement vom Antriebselement und damit von der Antriebskraft. Bedingt durch die Formänderung des Aktivierungselements bei Erreichen der Blockiertemperatur versagt die Entkopplung, so dass das Blockierelement mit der Antriebskraft beaufschlagt wird. In einer solchen Ausführungsform kann das Aktivierungselement ortsfest am Klappenantrieb, z. B. einem Chassis oder Gehäuseelement des Klappenantriebs montiert sein und die vom Antriebselement ausgeübte Antriebskraft aufnehmen, wodurch das Blockierelement von der Antriebskraft entkoppelt wird. Aufgrund der Gestaltänderung des Blockierelements, beispielsweise durch Schmelzen, Verbrennen und/oder Verdampfen, wirkt das Antriebselement die Antriebskraft auf das Blockierelement aus.

In einigen Ausführungsformen weist das Blockierelement ein blockierelementseitiges Formschlusselement auf, welches in der Freigabestellung mit einem aktivierungselementseitigen Formschlusselement des Aktivierungselements formschlüssig verbunden ist. Dieser Formschluss gewährleistet unterhalb der Blockiertemperatur einen Verbleib des Blockierelements in der Freigabestellung. Das aktivierungselementseitige Formschlusselement kann beispielsweise durch ein konvexes Formschlusselement gebildet werden, welches in der Freigabestellung in ein korrespondierendes konkaves Formschlusselement des Blockierelements eingreift und dadurch mit diesem verrastet; dabei bildet das konkave Formschlusselement das blockierelementseitige Formschlusselement. Mindestens eines der Formschlusselemente ist dabei zweckmässigerweise zur Herstellung der Verriegelung aus einer nicht verriegelten Ausgangsstellung bei der Montage bzw. dem Zusammenbau federnd ausgelegt, beispielsweise als federnde Klinke(n). Beim Überschreiten der Blockiertemperatur führt die Gestaltänderung des Aktivierungselements zu einem Versagen des Formschlusses und damit zu einer Freigabe des Blockierelements. Alternativ können die Anordnung von konkavem und konvexem Element bei gleicher Wirkung vertauscht werden. In weiteren Ausführungsformen sind das Blockierelement und das Aktivierungselement mit einander zugeordneten und in der Freigabestellung verrastenden Klinken ausgestattet sein.

In weiteren alternativen Ausführungsformen ist das Aktivierungselement starr mit dem Blockierelement verbunden und bildet mit diesem eine konstruktive Einheit. Im Ruhezustand ist das Blockierelement dabei mit einem ortsfest am Klappenantrieb angeordneten Gegenelement mechanisch gekoppelt. Die konstruktive Gestaltung der Elemente kann dabei auf die grundsätzlich gleichen Weisen erfolgen wie zuvor dargestellt.

In einigen Ausführungsformen umfasst das Antriebselement eine zwischen dem Blockierelement und einem Stützelement wirkende Feder. Das Stützelement ist dabei bezüglich des Klappenantriebs ortsfest angeordnet und bildet ein Gegenlager für die Feder, welche die Antriebskraft bereitstellt. Die Feder kann auf verschiedene grundsätzlich bekannte Weisen gestaltet sein. In günstigen beispielhaften Ausführungsformen ist die Feder als gebogene Blattfeder ausgeführt. Alternativ zu einem Antrieb mittels Feder kann das Antriebselement auch derart gestaltet sein, dass es die Antriebskraft erst aufgrund der Brandtemperatur, unterhalb der Blockiertemperatur, entwickelt. Die Bereitstellung der Antriebskraft kann in solchen Ausführungsformen insbesondere durch thermische Expansion des Antriebselements erfolgen.

In einigen Ausführungsformen wird das Blockierelement nach seiner Bewegung in die Blockierstellung kraftschlüssig und/oder formschlüssig in der Blockierstellung gesichert. Eine derartige Ausgestaltung verhindert eine ungewollte Freigabe des Abtriebsglieds des Brandschutzelements nach erfolgter Aktivierung der Blockiervorrichtung. Wird die Antriebskraft in der beschriebenen Weise durch eine Feder bereitgestellt, kann das Halten des Blockierelements durch eine von der Feder in der Blockierstellung aufgebrachten Haltekraft erfolgen. Alternativ oder zusätzlich können zum Halten des Blockierelements in der Blockierstellung weitere Halteelemente vorgesehen sein. Solche weiteren Halteelemente können insbesondere eine Haltefeder umfassen. Alternativ oder zusätzlich kann ein Sichern des Blockierelements in der Blockierstellung durch eine andere formschlüssige Verbindung, beispielsweise mittels einer Klinkenanordnung oder einer Kombination aus einem konkaven und einem konvexen Rastelement, wie oben dargestellt, erfolgen. Für eine derartige Anordnung erfolgt die Sicherung des Blockierelements in der Blockierstellung unabhängig von einer durch das Antriebselement ausgeübten Kraft.

In einigen Ausführungsformen bildet das Blockierelement in der Blockierstellung einen Anschlag für das Abtriebsglied. Der Anschlag verhindert dabei eine Bewegung des Abtriebsglieds aus der Sicherheitsstellung heraus. Alternativ oder zusätzlich können das Abtriebsglied und das Blockierelement einen anderweitigen Formschluss bilden, welcher das Abtriebsglied in der Sicherheitsstellung festlegt.

In einigen Ausführungsformen umfasst das Blockierelement eine drehbar gelagerte Blockierklinke oder einen drehbar gelagerten Blockierhebel.

In einigen Ausführungsformen umfasst das Abtriebsglied eine drehbar gelagerte und zwischen einer Normalstellung und der Sicherheitsstellung bewegbare Abtriebswelle. Bei einer derartigen Ausführungsform ist die Blockiervorrichtung zur Blockierung eines rotatorischen Klappenantriebs ausgelegt. Ein derartiger rotatorischer Klappenantrieb wird zum Antrieb üblicher rotatorisch bewegter Klappen eingesetzt. Alternativ kann der Klappenantrieb jedoch auch zur Realisierung anderer Antriebsbewegungen gestaltet sein, insbesondere translatorischer oder linearer Antriebsbewegungen. In einer solchen Ausführung als Linearantrieb kann der Klappenantrieb zum Antrieb von als Schieber gestalteten Klappen dienen.

In einigen Ausführungsformen ist das Blockierelement in der Freigabestellung nicht mit dem Abtriebsglied wirkverbunden. Für derartige Ausführungsformen ist das Abtriebsglied des Klappenantriebs in der Freigabestellung ohne einen Einfluss des Blockierelements zwischen der Normalstellung und der Sicherheitsstellung bewegbar. Ein mit einer derartigen Blockiervorrichtung ausgestatteter Klappenantrieb verhält sich im Ruhezustand der Blockiervorrichtung in gleicher Weise wie ein Klappenantrieb ohne Blockiervorrichtung. Hierdurch wird insbesondere sichergestellt, dass bei einer ungewollten Betätigung des Klappenantriebs, z. B. aufgrund eines Fehlalarms, keine Blockierung des Abtriebsglieds erfolgt und somit eine Rückstellung in die Normalstellung möglich ist. Entsprechendes gilt bei der gewollten Ansteuerung des Klappenantriebs ohne das Vorliegen eines Brandfalls, beispielsweise zu Testzwecken.

In einigen Ausführungsformen der Blockiervorrichtung liegt die Blockiertemperatur in einem Bereich von 120°C bis 350°C. Spezielle Aspekte einer derartigen Ausführungsform werden nachfolgend im Gesamtzusammenhang erfindungsgemässer Brandschutzeinrichtungen erläutert.

Gemäss einem weiteren Aspekt werden die Ziele der vorliegenden Erfindung durch Bereitstellung eines Klappenantriebs erreicht, wobei der Klappenantrieb eine erfindungsgemässe Blockiervorrichtung aufweist. In einigen Ausführungsformen ist der Klappenantrieb als motorisierter Klappenantrieb gestaltet. Ein solcher motorisierter Klappenantrieb kann insbesondere als motorisierter Klappenantrieb mit Federrücklauf gestaltet sein. Wie zuvor erwähnt, kann die Blockiervorrichtung aber auch in einem Antrieb ohne Federrücklauf eingesetzt werden.

Die erfindungsgemässe Blockiervorrichtung bildet im montierten Zustand eine Baugruppe des erfindungsgemässen Klappenantriebs. Die Blockiervorrichtung kann etwa an ein Chassisteil oder ein sonstiges Gehäuseteil des Klappenantriebs angebaut sein und auch vollständig innerhalb eines Gehäuses des Klappenantriebs angeordnet sein.

In einer Alternative zu den zuvor beschriebenen Ausführungsformen sind das Blockierelement, das Antriebselement und das Aktivierungselement integral realisiert. In einer derartigen Ausführungsform umfasst dass Blockierelement ein Reservoir von einem aufschäumbaren Material, welches bei Überschreiten der Blockiertemperatur aufschäumt und dadurch das Abtriebsglied blockiert, insbesondere durch Form- und/oder Kraftschluss. Das Reservoir kann in einer kompakten Form, z. B. in einer Patrone oder Kartusche bereitgestellt werden und/oder innerhalb des Klappenantriebs verteilt, z. B. als Auskleidung des ganzen oder eines Teils einer Gehäuseinnenwand oder mehrerer Gehäsueinnenwände. Das aufschäumbare Material kann unmittelbar auf das Abtriebsglied, z. B. im Bereich seiner Lagerung und/oder Verzahnung, einwirken, sowie alternativ oder zusätzlich auf im Kraftfluss vorgelagerte Komponenten des Klappenantriebs wirken. Ferner kann das aufschäumbare Material einen den Gehäuseinnenraum des Klappenantriebs im aufgeschäumten Zustand ganz oder teilweise ausfüllen.

Gemäss einem weiteren Aspekt werden die Ziele der vorliegenden Erfindung durch Bereitstellung einer Brandschutzeinrichtung erreicht. Die Brandschutzeinrichtung umfasst einen erfindungsgemässen Klappenantrieb entsprechend der vorliegenden Erfindung und eine durch das Abtriebsglied des Klappenantriebs angetriebene Klappe. Die Brandschutzeinrichtung umfasst ferner einen mit dem Klappenantrieb operativ gekoppelten Auslöser. Der Auslöser steuert den Klappenantrieb im Betrieb derart, dass der Klappenantrieb das Abtriebsglied und die von diesem angetriebene Klappe bei Ansprechen aus einer Normalstellung in die Sicherheitsstellung bewegt.

In einigen Ausführungsformen der Brandschutzeinrichtung ist der Auslöser derart ausgelegt, dass er im Brandfall vor Erreichen der Blockiertemperatur anspricht. Übliche Temperaturen, bei denen ein Ansprechen der Brandschutzeinrichtung erfolgt, liegen für übliche thermische Auslöser z. B. bei 72°C, 95°C oder 105°C, während die Blockiertemperatur z. B. in einem Bereich von 120°C bis 350°C und damit deutlich oberhalb der Ansprechtemperatur des Auslösers liegt. Elektronische Sensoren wie z. B. Rauchmelder sprechen ebenfalls unterhalb der Blockiertemperatur an. Für eine derartige Anordnung erfolgt im Brandfall zunächst ebenso wie für bekannte Klappenantriebe und Brandschutzeinrichtungen eine Bewegung des Abtriebsglieds und damit der angetriebenen Klappe in die Sicherheitsstellung. Erst bei einem länger anhaltenden Brand und einer damit verbundenen Überschreitung der Blockiertemperatur erfolgt eine Aktivierung der Blockiervorrichtung und somit eine Blockierung des Abtriebsglieds. Nach einer Aktivierung der Blockiervorrichtung ist eine einfache Rückstellung des Abtriebsglieds in die Normalstellung durch Ansteuerung des Klappenantriebs nicht mehr möglich.

Gemäss einem weiteren Aspekt werden die Ziele der vorliegenden Erfindung durch Bereitstellung eines Verfahrens zum Betrieb eines Klappenantriebs erreicht. Das Verfahren umfasst:
- Bei Nichtvorliegen eines Brandfalls: Halten eines Abtriebsglieds des Klappenantriebs in einer Normalstellung und Halten eines Blockierelements einer Blockiervorrichtung des Klappenantriebs in einer Freigabestellung;
- Erkennen des Vorliegen eines Brandfalles;
- bei Vorliegen eines Brandfalls: Bewegen des Abtriebsglieds aus der Normalstellung in eine Sicherheitsstellung unter Verbleib des Blockierelements in der Freigabestellung;
- bei Überschreiten einer Blockiertemperatur nach einem Bewegen des Abtriebsglieds in die Sicherheitsstellung: Bewegen des Blockierelements aus der Freigabestellung in eine Blockierstellung, in welcher das Blockierelement das Abtriebsglied in der Sicherheitsstellung blockiert, wobei das Bewegen der Blockierelements durch eine irreversible Gestaltänderung eines Aktivierungselements der Blockiervorrichtung ausgelöst wird.

Das Verfahren zum Betrieb eines Klappenantriebs kann insbesondere mittels eines Klappenantriebs entsprechend der vorliegenden Erfindung ausgeführt werden. Offenbarte Ausführungsformen erfindungsgemässer Klappenantriebe oder Brandschutzeinrichtungen offenbaren damit zugleich entsprechende Ausführungsformen des Verfahrens zum Betrieb eines Klappenantriebs.

### Kurze Beschreibung der Zeichnungen

Nachfolgend wird eine Ausführung der vorliegenden Erfindung anhand eines Beispiels beschrieben. Das Beispiel der Ausführung wird durch die folgenden beigelegten Figuren illustriert:
Figur 1: zeigt schematisch im Querschnitt eine beidseitig mit einem Lüftungskanal verbundene Klappe mit Klappenantrieb.
Figur 2: zeigt einen Klappenantrieb mit teilweise entferntem Gehäuse.
Figur 3a: zeigt die Blockiervorrichtung des Klappenantriebs als separate Baugruppe im montierten Zustand.
Figur 3b: zeigt die Blockiervorrichtung des Klappenantriebs mit voneinander beabstandeten Komponenten (Explosionszeichnung).
Figur 4: zeigt die Blockiervorrichtung gemeinsam mit weiteren Bestandteilen des Klappenantriebs in der Freigabestellung der der Blockiervorrichtung und der Normalstellung des Abtriebsglieds des Klappenantriebs.
Figur 5a, 5b: zeigen die Blockiervorrichtung gemeinsam mit weiteren Bestandteilen des Klappenantriebs in Blockierzustand der Blockiervorrichtung und in der Sicherheitsstellung des Abtriebsglieds des Klappenantriebs.
Figur 6: zeigt eine Abtriebswelle mit Zahnradsegment.
Figur 7: zeigt eine manuelle Betätigungsvorrichtung für einen Klappenantrieb.
Figur 8a, 8b, 8c: zeigen jeweils einen Betriebszustand einer Arretiervorrichtung für einen Klappenantrieb.
Figur 9: zeigt den Klappenantrieb in vereinfachter Form mit voneinander beabstandeten Komponenten (Explosionszeichnung).

### Wege zur Ausführung der Erfindung

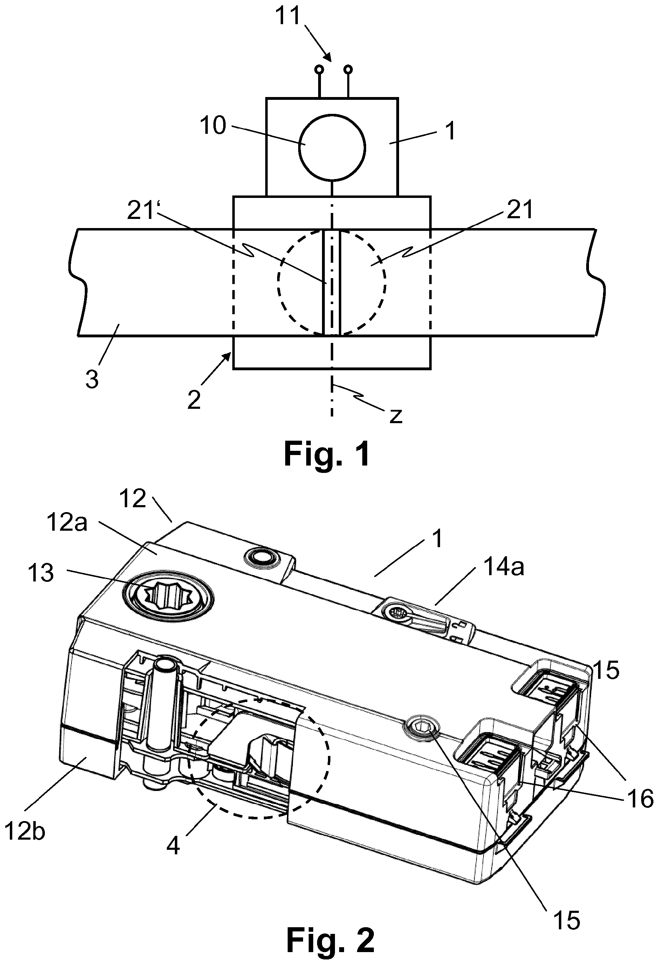

In der Figur 1 bezieht sich das Bezugszeichen 2 auf eine Klappe, welche hier exemplarisch als Brandschutzklappe eingesetzt wird. Die Klappe 2 ist mit einem Lüftungskanal 3 verbunden, beispielsweise einem Rohr mit rundem oder rechteckigem Querschnitt. Der Durchgang durch den Lüftungskanal 3 wird durch die Stellung eines um eine Drehachse z drehbaren Brandschutzklappenelements 21, 21' der Brandschutzklappe 2 gesteuert. Das Brandschutzklappenelement 21, 21' wird durch einen mit der Brandschutzklappe 2 verbundenem Klappenantrieb 1 bewegt respektive in Stellung gehalten. Der Klappenantrieb 1 ist vorzugsweise als Federrücklaufantrieb gestaltet und umfasst einen elektrischen Motor 10 sowie eine Rücklauffeder (nicht separat dargestellt). Bei der Konfiguration als Brandschutzklappe wird das Klappenelement 21, 21' respektive die Brandschutzklappe 2 im Normalbetrieb durch den unter Spannung 11 stehenden Motor 10 in geöffneter Stellung (Normalstellung) gehalten, wie mit dem Bezugszeichen 21 angedeutet wird. Im Brandfall wird die Stromzufuhr zum Motor 10 unterbrochen und die Brandschutzklappe 2 wird durch eine Feder des Antriebs 1 in die geschlossene Stellung (Sicherheitsstellung) gebracht, wie mit dem Bezugszeichen 21' angedeutet wird.

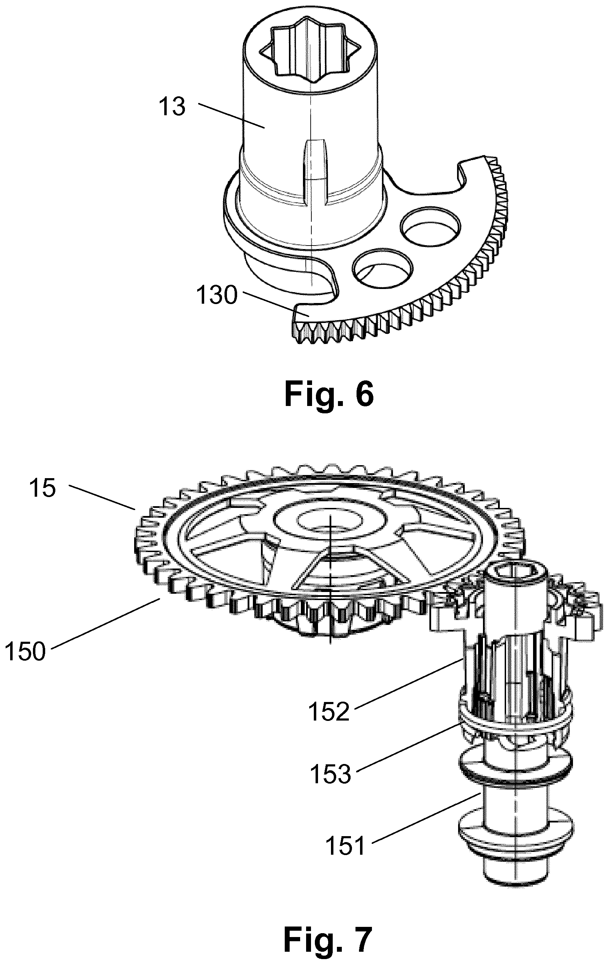

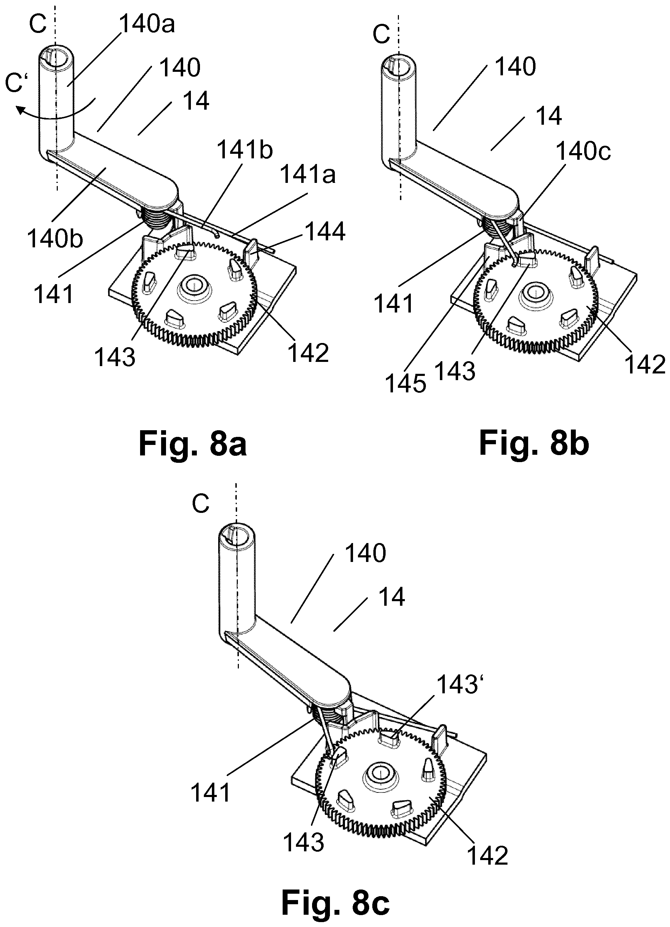

Nachfolgend wird zusätzlich auf die Figur 2 Bezug genommen. Figur 2 zeigt einen Klappenantrieb 1 mit teilweise entferntem Gehäuse 12. Bei dem Klappenantrieb 1 handelt es sich um einen motorischen Klappenantrieb mit Federrücklauf, wie aus dem Stand der Technik grundsätzlich bekannt und zuvor beschrieben. Der Klappenantrieb 1 weisst eine - weiter unten mit Bezug auf Figur 6 näher erläuterte - Abtriebswelle 13 als Abtriebsglied zur Kopplung der anzutreibenden Brandschutzklappe 2 auf. Exemplarisch ist die Abtriebswelle 13 als Hohlwelle mit einer sternförmigen Innenkontur ausgeführt, welche zur verdrehgesicherten Aufnahme einer Antriebswelle der Brandschutzklappe 2 vorgesehen ist. Der Klappenantrieb 1 ist ferner mit einer optionalen - weiter unten mit Bezug auf Figur 7 näher erläuterten - manuellen Betätigungseinrichtung 15 zur Bewegung der Abtriebswelle 13 ohne den Motor 10 ausgestattet. Der Klappenantrieb 1 ist ferner mit einer ebenfalls optionalen - weiter unten mit Bezug auf die Figuren 8a, 8b, 8c näher erläuterten - Arretiervorrichtung ausgestattet, von welcher in Figur 2 ein Bedienelement 14a sichtbar ist. Elektrische Anschlüsse sind summarisch unter dem Bezugszeichen 16 zusammengefasst und umfassen Anschlüsse oder Zuleitungen zur Versorgung des Motors 10 mit der Spannung 11, zum Anschluss eines Auslösers sowie Anschüsse eines optionalen Hilfsschalters, welcher als Lageschalter detektiert, ob sich die Abtriebswelle 13 in ihrer Normalstellung oder ihrer Sicherheitsstellung befindet.

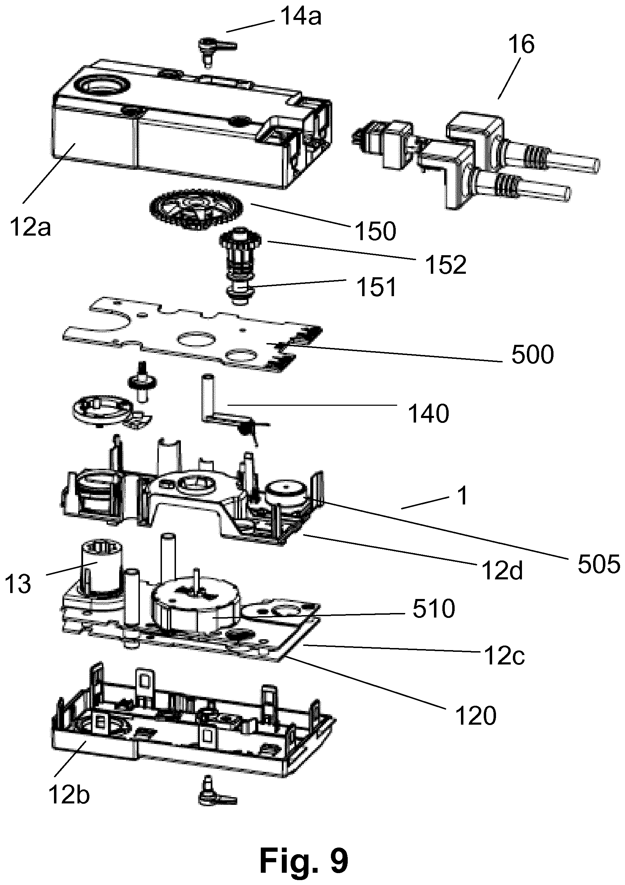

Das Gehäuse 12 besteht aus zwei Gehäuseschalen, welche z. B. mittels Schraubverbindungen oder Schnappverbindern verbunden sind. Alle Öffnungen und Ausbrüche des Gehäuses, z. B. für die Verschraubung der Gehäuseschalen, die Abtriebswelle 13, die manuelle Betätigungseinrichtung 15 und die das Bedienelement 14a der Verriegelungsvorrichtung, sind abgedichtet, wobei die Dichtelemente als Weichkomponenten an die Gehäuseschalen angespritzt seien können, wodurch sich die Zahl der zu montierenden Teile reduziert. Eine vereinfachte Explosionsdarstellung des Klappenantriebs 1 ist in Figur 9 dargestellt und weiter unten beschrieben.

Der Klappenantrieb 1 ist ferner mit einer erfindungsgemässen Blockiervorrichtung 4 ausgestattet, welche innerhalb des Gehäuses 12 als Baugruppe angeordnet ist. Auch wenn es sich bei dem in Figur 2 dargestellten Klappenantrieb 1 um einen motorischen Klappenantrieb mit Federrücklauf handelt und eine erfindungsgemässe Blockiervorrichtung in Verbindung mit einem derartigen Klappenantrieb vorteilhaft eingesetzt werden kann, ist eine derartige Konstruktion des Klappenantriebs für die nachfolgend beschriebene Blockiervorrichtung nicht zwingend und daher als beispielhaft aufzufassen.

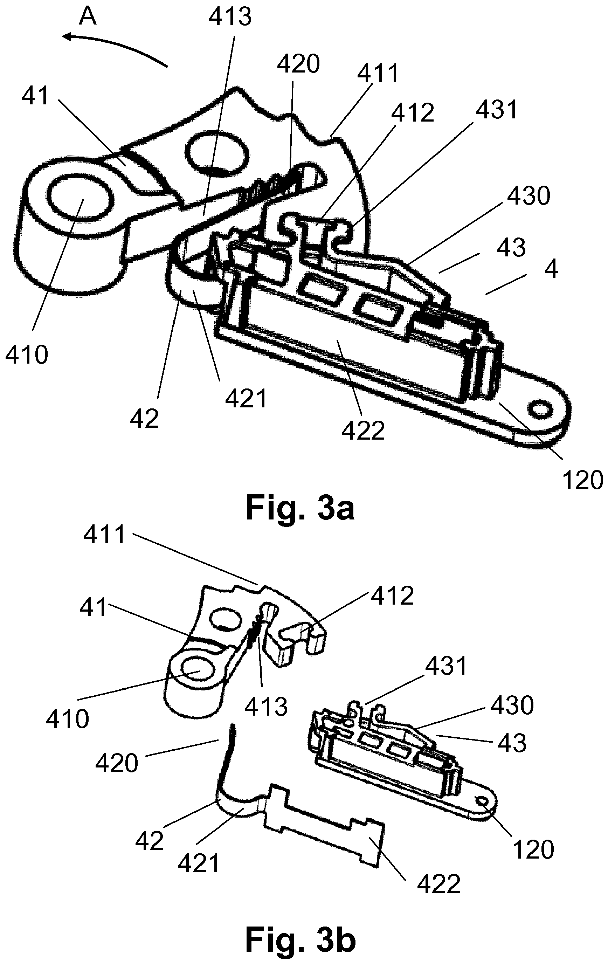

Nachfolgend wird zusätzlich auf Figuren 3a, 3b Bezug genommen. Figur 3a zeigt die Blockiervorrichtung 4 des Klappenantriebs 1 als separate Baugruppe im montierten zustand, während Figur 3b die Baugruppe in einer Explosionsdarstellung zeigt. Der Klappenantrieb 4 umfasst das als Blockierklinke 41 ausgeführte Blockierelement. Die Blockierklinke 41 weiss eine Nabe 410 auf, durch welche sie im montierten Zustand mittels einer (in Figur 3 nicht dargestellten) Lagerachse drehbar gelagert ist. Die Lagerachse ist an einem Gehäuseelement des Klappenantriebs 1 ortsfest montiert ist. Entsprechend kann die Blockierklinke 41 eine Schwenkbewegung um die Nabe 410 in bzw. entgegen der durch den Pfeil A angedeutete Richtung vollführen. In Figur 3 ist die Blockiervorrichtung 4 in der Freigabestellung im Ruhezustand gezeigt.

Die Blockiervorrichtung 4 umfasst ferner das als gebogene Blattfeder ausgeführtes Antriebselement 42. Ein beweglicher Schenkel oder ein Endsegment 420 der Blattfeder 42 greift in einen Schlitz 413 der Blockierklinke 41 ein und stellt dadurch eine Wirkverbindung zur Beaufschlagung der Blockierklinke 41 mit der Antriebskraft dar. Über ein U-förmiges Mittelsegment 421, welches für die Erzeugung der Antriebskraft durch die Blattfeder 42 verantwortlich ist, ist das Endsegment 420 mit einem gegenüberliegenden ruhenden Endsegment 422 verbunden. Das Endsegment 422 ist im Wesentlichen gerade ausgeführt und besitzt (nur Figur 3b sichtbare, nicht referenzierte) Laschen zur ortsfesten Montage in korrespondierenden, beispielsweise schlitzförmigen Ausnehmungen oder Ausbrüchen eines Chassiselements 120 des Gehäuses 12. Das Chassiselement 120 wirkt damit als Stützelement und Gegenlager für die Blattfeder 42. Alternativ oder zusätzlich ist eine Montage am Gehäuse 12 auch durch weitere Verfahren wie Verschrauben, Verkleben, Klemmen, Schweissen, etc. möglich.

Die Blockiervorrichtung 4 umfasst ferner das als Schmelzklammer 43 ausgeführte Aktivierungselement. Die Schmelzklammer 43 umfasst ferner ein konvexes Formschlusselement 431, welches durch zwei einander gegenüberliegende Klinken realisiert ist. In der gezeigten Ruhestellung greifen die Klinken in ein korrespondierendes konkaves Formschlusselement 412 der Blockierklinke 41 ein. Aufgrund des hierdurch gegebenen Formschlusses wird die Blockierklinke 41 gegen die durch die gespannte Blattfeder 42 in Richtung des Pfeils A ausgeübte Antriebskraft in der Freigabestellung gehalten. Als die Rückhaltekraft aufnehmendes Gegenlager für die Schmelzklammer 43 kann das Gehäuse 12, beispielsweise das Chassiselement 120, und/oder das ruhende Endsegment 422 dienen.

Im Gegensatz zur Blockierklinke 41, welche aus einem über die Blockiertemperatur hinaus formbeständigen Material, z. B. Stahl, gefertigt ist, schmilzt die Schmelzklammer 43 bei Überschreitung der Blockiertemperatur und kann damit die Rückhaltekraft nicht mehr aufbringen, so dass die Blockierklinke 41 aufgrund der durch die Blattfeder 42 ausgeübten Antriebskraft in die Blockierstellung schwenkt.

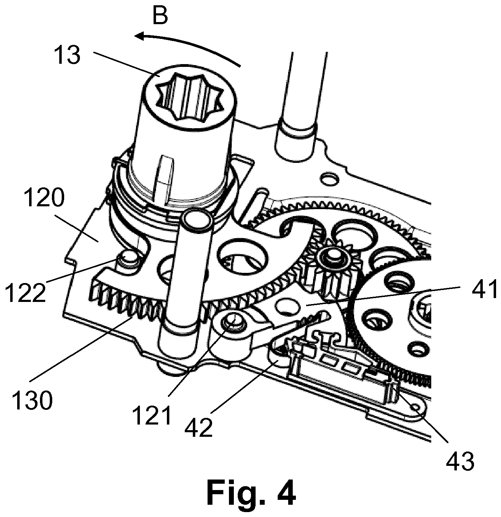

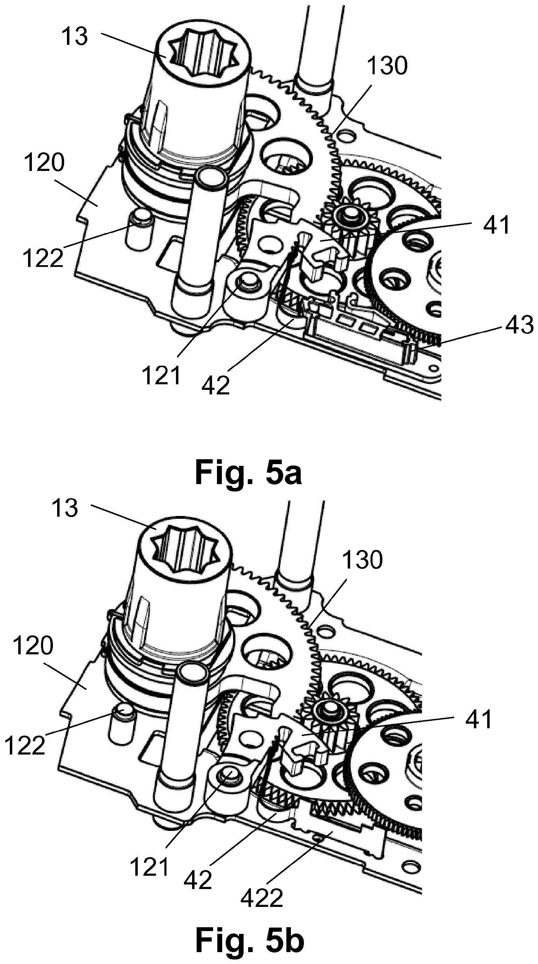

Nachfolgend wird zusätzlich auf die Figuren 4 und 5 Bezug genommen, welche die Funktion der Blockiervorrichtung im Zusammenwirken mit weiteren Bestandteilen des Klappenantriebs 1 verdeutlichen. Die Figur 4 stellt die die Situation im Ruhezustand dar, wobei sich die Abtriebswelle13 in der Normalstellung und die Blockiervorrichtung 4 wie in Figur 3 in der Freigabestellung befindet. Das Abtriebsglied bzw. die Abtriebswelle 13 besitzt entlang eines Teils Ihres Umfangs ein Zahnradsegment 130, welches mit weiteren (nicht referenzierten) und im Kraftfluss antriebsseitig der Abtriebswelle 13 angeordneten Komponenten des Klappenantriebs 1 in Eingriff steht. Die Normalstellung der Abtriebswelle 13 ist durch einen Anschlag des Zanhradsegements 130 gegen einen Blockierstift 122 definiert. Der Blockierstift 122 ragt vom Chassiselement 120 ab.

Bei Wegfall der Motorspannung 11 wird die Abtriebswelle 13 mittels des Zahnradsegmentes 130 federgetrieben Mittels einer Drehung in der durch Pfeil B dargestellten Richtung in die Sicherheitsstellung bewegt, wie zuvor beschrieben. Dabei befindet sich das Blockierelement weiterhin in Freigabestellung (nicht dargestellt). Ohne eine Auslösung der Blockiervorrichtung kann die Abtriebswelle 13 durch Bestromung des Motors 10, d. h. Anlegen der Spannung 11, aus der Sicherheitsstellung wieder in die Normalstellung bewegt werden, wodurch zugleich die Rücklauffeder des Klappenantriebs gespannt wird.

Nachfolgend wird zusätzlich auf die Figuren 5a, 5b Bezug genommen. Die Figuren 5a, 5b stellen die Situation nach erfolgter Aktivierung der Blockiervorrichtung 4 dar. Die Figur 5b unterscheidet sich von der Figur 5a lediglich dadurch, dass zur Verdeutlichung die Klammer 43 in Figur 5a (in ihrer ursprünglichen Gestalt) vorhanden und in Figur 5b weggelassen ist. In der Praxis wird die Klammer 43 in der Regel teilweise wegschmelzen. Nach Wegfall der durch die Schmelzklammer 43 aufgebrachten Rückhaltekraft entspannt sich die Blattfeder 42 und bewegt dabei die Blockierklinke 41 durch ein Schwenken in Richtung A um die Lagerachse 121 in die in Figur 5 dargestellte Blockierstellung. In dieser bildet eine Anschlagkante 411 der Blockierklinke 41 einen Anschlag für das Zahnradsegment 130 und blockiert die Abtriebswelle 13 dauerhaft in der Sicherheitsstellung.

Bei der Bewegung aus der Freigabestellung in die Blockierstellung wird die Feder 42 nicht vollständig entspannt. In der Blockierstellung beaufschlagt sie die Blockierklinke 41 hierdurch mit einer in Richtung der Blockierstellung wirkenden Haltekraft, wodurch die Blockierklinke 41 in der Blockierstellung gesichert wird.

Der Aufbau und die Funktion der zuvor beschriebenen und in den Figuren 3 bis 5 dargestellten Blockiervorrichtung kann in verschiedener Weise modifiziert werden.

So wirkt die Blockierklinke 41 der dargestellten Ausführungsform unmittelbar auf die Abtriebswelle 13. In gleicher Weise kann das Blockierelement auch auf ein anderes Getriebeelement des Klappenantriebs 1 wirken, welches im Kraftfluss antriebsseitig der Abtriebswelle 13 angeordnet ist, solange im Brandfall eine steife Kopplung mit der Abtriebswelle 13 gewährleistet ist. Ferner kann die Blockierklinke 41 zusätzlich oder alternativ zur Bildung eines Anschlags für die Abtriebswelle 13 in der Blockierstellung mit der Abtriebswelle 13 formschlüssig verriegeln, z. B. mittels einer Schnappverbindung.

Alternativ oder zusätzlich zur Ausübung einer Haltekraft auf die Blockierklinke 41 durch die Blattfeder 42 kann eine Haltekraft auf die Blockierklinke 41 in der Blockierstellung auch durch eine separate Haltefeder ausgeübt werden. In Ausführungsformen, in denen die Blockierklinke 41 in der Blockierstellung formschlüssig verriegelt, ist eine Haltekraft ferner nicht zwingend.

Die Anordnung von konvexem Formschlusselement 431 und konkavem Formschlusselement 412 können vertauscht werden.

In der dargestellten Ausführungsform ist die Schmelzklammer 43 ortsfest im Klappenantrieb 1 angeordnet und interagiert in der Freigabestellung mit der Blockierklinke 41 mittels der Formschlusselemente 431 und 412. Alternativ kann ein Aktivierungselement starr mit der Blockierklinke 41 verbunden sein und mit dieser eine konstruktive Einheit bilden. In der Freigabestellung gemäss Figur 4 ist die Blockierklinke 41 dabei mit einem ortsfest am Klappenantrieb 1 angeordneten Gegenelement mechanisch gekoppelt und wird dadurch entgegen der Antriebskraft in der Freigabestellung gehalten. So kann in der Ausführungsform gemäss Figur 3 bis Figur 5 das Aktivierungselement aus thermoplastischem Kunststoff das konkave Formschlusselement 412 umfassen und mit der Blockierklinke 41 fest verbunden sein. Als Gegenelement kann ein am Klappenantrieb 1 ortsfest montiertes konvexes Formschlusselement dienen, welches in grundsätzlich gleicher Weise gestaltet sein kann wie das dargestellte konvexe Formschlusselement 431.

In der dargestellten Ausführungsform ist das Antriebselement in Form der Blattfeder 42 ortsfest am Chassiselement 120 des Gehäuses 12 montiert. Alternativ kann die Blattfeder 42 jedoch auch an der Blockierklinke 41 fest montiert sein und sich gegen ein ortsfest am Chassiselement 120 oder einem anderen Teil des Gehäuses 12 angeordneten Gegenlager abstützen und auf diese Weise zwischen dem Gegenlager und der Blockierklinke 41 wirken. Ferner kann statt der Blattfeder 42 eine andere Feder als Antriebselement eingesetzt werden, beispielsweise eine als Zug- oder Druckfeder wirkende Spiralfeder.

Nachfolgend wird zusätzlich auf Figur 6 Bezug genommen. Figur 6 zeigt die Abtriebswelle 13 des Klappenantriebs 1 mit einem im Wesentlichen rotationssymmetrischen (zylindrischen) Korpus (nicht referenziert), welcher die eigentliche Welle bildet, und hiermit fest verbundenem Zahnradsegment 130. Der Korpus und das Zahnradsegment 130 können separat aus verschiedenen Materialien und/oder nach verschiedenen Fertigungsverfahren hergestellt und anschliessend in bekannter Weise, z. B. durch Aufschrumpfen, verbunden werden. So kann etwa der Korpus spanabhebend und das Zahnradsegment 130 in einem Sinterverfahren gefertigt werden. Alternativ wird die Abtriebswelle einstückig in einem Urformverfahren, z. B, einem Sinterverfahren, gefertigt. Eine Abtriebswelle gemäss Figur 6 kann auch in anderen Klappenantrieben eingesetzt werden, welche keine Blockiervorrichtung aufweisen.

Nachfolgend wird zusätzlich auf Figur 7 Bezug genommen. Figur 7 zeigt eine manuelle Betätigungsvorrichtung 15, wie sie beispielsweise im Klappenantrieb 1 vorhanden ist, aber auch in sonstigen Klappenantrieben ohne Blockiervorrichtung verwendet werden kann. Die gezeigte manuelle Betätigungsvorrichtung 15 zeichnet sich durch einen nachfolgen erläuterten integrierten Überlastschutz aus. Die manuelle Betätigungsvorrichtung 15 weist eine im Gehäuse 12 gelagerte Betätigungswelle 151 mit einem Innensechskant (siehe auch Figur 2) auf, welcher zur manuellen Betätigung mit einem separaten Betätigungselement, z. B. einer Handkurbel, gekoppelt wird. Zur Kopplung ist in der Ausführung gemäss Figur 7 exemplarisch ein Innensechskant vorgesehen (nicht referenziert, siehe auch Figur 2). Koaxial um die Betätigungswelle 151 herum ist ein Ritzel 152 mit einer Nabe (nicht referenziert) angeordnet, welches mit einem im Kraftfluss des Klappenantriebs sitzenden Zahnrad 150 kämmt. Auf einem Teil ihres Umfangs weist die Betätigungswelle 151 eine Aussenverzahnung auf, während die Nabe des Ritzels eine entsprechende, mit der Aussenverzahnung in Eingriff stehende, Innenverzahnung aufweist, wobei die Zahnflanken zum Beispiel als geneigte Eben ausgebildet sind. Ferner ist die Nabe des Ritzels 151 auf einem Teil ihrer Länge axial geschlitzt, so dass sich ihr Durchmesser federnd vergrössern kann. Ein Teil der Nabe ist ferner von einer Vorspannfeder 153 umschlungen, welche auf die geschlitzte Nabe eine radiale, nach innen gerichtete Vorspannkraft ausübt. Auf diese Weise ist das Ritzel 152 bis zu einem Grenzdrehmoment, welches wesentlich von der Vorspannkraft und der Verzahnung bestimmt wird, mit der Betätigungswelle verdrehsicher verbunden, so dass es zur manuellen Betätigung ein Drehmoment auf das Zahnrad 150 übertragen kann. Bei Überschreiten des Grenzdrehmomentes überschreitet die an der Verzahnung wirkende Radialkraft die von der Vorspannfeder 152 ausgeübte Vorspannkraft, so dass sich der Nabendurchmesser federnd vergrössert; hierdurch wird die Verzahnung ausser Eingriff gebracht und die verdrehgesicherte Verbindung aufgehoben. Auf diese Weise wird eine bei manueller Betätigung ansonsten mögliche Überlastung des Klappenantriebs 1 verhindert.

Nachfolgend wird zusätzlich auf die Figuren 8a, 8b, 8c Bezug genommen. Die Figuren 8a, 8b, 8c zeigen eine Arretiervorrichtung 14, wie sie beispielsweise im Klappenantrieb 1 vorhanden ist, aber auch in sonstigen Klappenantrieben ohne Blockiervorrichtung verwendet werden kann. Die gezeigte manuelle Betätigungsvorrichtung wird in Verbindung mit einer manuellen Betätigungsvorrichtung 15 wie zuvor beschrieben verwendet. Mit Hilfe der manuellen Betätigungsvorrichtung und der Arretiervorrichtung kann die Abtriebswelle ohne Verwendung des Motors in eine gewünschte Stellung bewegt und dort gesichert werden, was etwa bei der Inbetriebnahme, sowie zu Test- und Wartungszwecken erforderlich sein kann.

Die Arretiervorrichtung 14 umfasst einen kurbelförmig ausgebildeten Betätigungshebel 140 mit Hebelelementen 140a, 140b. Das Hebelelement 140a ist im Gehäuse 12 um die Achse C schwenkbar gelagert und wird zur Betätigung der Arretiervorrichtung mit einem Betätigungselement 14a (siehe Figur 2) bewegt bzw. geschwenkt.

Die Arretiervorrichtung 14 umfasst ferner ein im Kraftfluss des Klappenantriebs 1 angeordnetes Zahnrad 142, von welchem entlang seines Umfangs eine Anzahl von Nocken 143 absteht.

Das Arretierelement umfasst ferner eine Arretierfeder 141, welche an einer dem Hebeelement 140a gegenüberliegenden Seite des Hebelelements 140b angeordnet ist und mit dem Betätigungshebel 140 geschwenkt wird. Die Arretierfeder 141 ist als Spiralfeder ausgebildet und weist an ihren Enden zwei radial abstehende Federschenkel 141a, 141b auf, wobei die Federschenkel in einer unausgelenkten Stellung der Arretierfeder 141 im Wesentlichen zu einander parallel sind. Der Federschenkel 141a ist gegen ein Widerlager 144 festgelegt.

Figur 8a zeigt die Arretiervorrichtung 14 in einer nicht arretierten Stellung, in welcher die Feder 141 und insbesondere der Federschenkel 141b mit den Nocken 143 nicht in Wirkverbindung steht; in dieser Stellung kann sich das Zahnrad 142 frei bewegen. Die Bewegungsrichtungen sind dabei so, dass sich das Zahnrad 142 bei einer durch die Rücklauffeder angetriebenen Bewegung in Richtung der Sicherheitsstellung entgegen dem Uhrzeigersinn dreht (Betrachtung von oben) und entsprechend entgegen der Sicherheitsstellung mit dem Uhrzeigersinn.

Figur 8b zeigt die arretierte Stellung, welche sich durch ein Schwenken des Betätigungshebels 140 in der Richtung C' ergibt. Bei der Bewegung aus der Konfiguration nach Figur 8a in die Konfiguration nach Figur 8b wird die zuvor entspannte Arretierfeder 141 gespannt, da der Federschenkel 141a durch das Widerlager 144 festgelegt ist und der Schwenkbewegung nicht folgen kann. Während der Schwenkbewegung gleitet der andere Federschenkel 141b über eine angeschrägte Kante (nicht referenziert) eines ortsfesten Führungselementes 145 und greift schliesslich in einen (nicht referenzierten) Einschnitt des Führungselementes 145 ein, wie in Figur 8b dargestellt. Bei einer Freigabe der manuellen Betätigungsvorrichtung 15 bewegt sich das Zahnrad 142 unter der Kraft der Rücklauffeder soweit im Uhrzeigersinn, d. h. in Richtung Sicherheitsstellung, bis ein Nocken 143 an den Federschenkel 141b anschlägt. Die Arretierfeder 141 übt nun über den Federschenkel 141b eine der Kraft der Rücklauffeder entgegengerichtete Kraft aus und hebt diese auf, so dass der Antrieb in seiner Stellung arretiert bleibt.

Eine Aufhebung der Arretierung, das heisst ein Übergang von der Konfiguration gemäss Figur 8b zur Konfiguration gemäss Figur 8a, kann sowohl manuell als auch mittels des Motors des Klappenantriebs 1 erfolgen. Zur manuellen Aufhebung der Arretierung wird der Arretierhebel entgegen der Richtung C' geschwenkt. Dabei schlägt ein Stift 140c des Arretierhebels 140 an den Federschenkel 141b an und hebt ihn vom Widerlager 144 ab, so dass der Federschenkel 141b sich aus dem Eingriff mit Führungselement 145 löst und in seine Ruhelage zurückschnappt. Für eine Aufhebung der Arretierung mittels Motor wird die Abtriebswelle 13 entgegen der Sicherheitsstellung bewegt, was eine Drehung des Zahnrades 142 im Uhrzeigersinn bedeutet; hierdurch wird der Nocken 143 vom Federschenkel 141b abgehoben und der Federschenkel 143b schnappt aufgrund der Federkraft der Arretierfeder 141 ebenfalls in seine Ruhelage zurück.

Ein solches motorisiertes Lösen der Arretierung ist aus Sicherheitsgründen vorteilhaft. Es ist bekannt, dass in Anschluss an eine bewusste Arretierung z. B. im Rahmen der Inbetriebnahme oder Wartung, diese anschliessend versehentlich nicht wieder gelöst wird, so dass der Antrieb in der arretierten Stellung verbleibt und sich das Abtriebsglied im Brandfall nicht in die Sicherheitsstellung bewegt. Durch das automatische Lösen der Arretierung bei einer Bestromung des Motors ist sichergestellt, dass die Arretierung in jedem Fall aufgehoben wird.

Bei einer manuellen Bewegung in eine Richtung entgegen der Sicherheitsstellung und anschliessender Verriegelung ist es ohne weitere Massnahmen möglich, dass der Antrieb mittels der Rücklauffeder im Anschlag so stark gespannt wird, dass das zuvor beschriebene Lösen der Arretierung mittels Motor nicht mehr möglich ist. Dies tritt dann ein, wenn das von der Rücklauffeder erzeugte sowie das aufgrund der inhärenten Getriebeelastizität vorhandene Moment das vom Motor aufbringbare Moment übersteigt.

Wie nachfolgend mit zusätzlichem Bezug auf Figur 8c erläutert, wird das auftreten einer derartigen Situation durch die dargestellte Arretiervorrichtung 14 verhindert. Überschreitet das von der Rücklauffeder aufgebrachte Moment einen zulässigen Maximalwert, so gleitet - ausgehend von der in Figur 8b gezeigten Konfiguration - ein im Eingriff mit dem Federschenkel 141b stehende Nocken 143 über das nach aussen gebogene freie Ende (nicht referenziert), so dass der Federschenkel 141b den Nocken 143 freigibt. Das Zahnrad 142 kann sich demzufolge - angetrieben von der Rücklauffeder - in Richtung der Sicherheitsstellung bewegen, wobei das freie Ende des Federschenkels 141b an der äusseren Wandung des Nockens 143 entlanggleitet, bis es schliesslich mit den Kontakt mit dem Nocken 143 verliert, wodurch die Feder 143 entspannt wird. Bei Fortsetzung der Drehung des Zahnrads 142 schlägt schliesslich ein nachfolgender Nocken 143' an den Federschenkel 141b an, wodurch wiederum die Konfiguration gemäss Figur 8b ergibt. Dieser Vorgang wiederholt sich so oft, bis das Moment der Rücklauffeder den Maximalwert nicht mehr überschreitet, so dass die Arretierstellung gemäss Figur 8b bestehen bleibt.

Die dargestellte Arretiervorrichtung 14 besitzt somit insgesamt die Eigenschaften, sich sowohl manuell als auch mit Hilfe des Motors lösen zu lassen und das von der Rücklauffeder aufgebrachte Moment auf einen Maximalwert zu begrenzen, bei dem ein Lösen der Arretierung mit Hilfe des Motors möglich ist.

Nachfolgend wird zusätzlich auf Figur 9 Bezug genommen. Figur 9 zeigt eine Explosionsdarstellung des Klappenantriebs 1. Der Klappenantrieb 1 ist als mehrlagiger Sandwichaufbau zwischen den Gehäuseschalen 12a, 12b realisiert Die wesentlichen Komponenten werden durch zwei beabstandete Platinen aufgenommen, wobei die untere der Platinen die Platine 120 ist. Zwischen den Platinen ist insbesondere das Getriebe des Klappenantriebs 1 mit der Blockiervorrichtung 4 angeordnet. Die obere der Platinen trägt auch die Rücklauffeder 510. Oberhalb der Platinen 1 2c ist über eine Zwischenstruktur 12d, welche den Motor 505 trägt, eine Leiterplatte 500 angeordnet, auf welcher sich die Kontroll- und Ansteuerschaltung für den Motor 505 befindet.

## Patentansprüche

1. Blockiervorrichtung (4) für einen Klappenantrieb (1), wobei die Blockiervorrichtung (4) durch Aktivierung aus einem Ruhezustand in einen alternativen aktivierten Zustand überführbar ist und die Blockiervorrichtung (4) umfasst:
- ein Blockierelement (41), wobei das Blockierelement (41) beweglich gelagert und dadurch zwischen einer im Ruhezustand eingenommenen Freigabestellung und einer im aktivierten Zustand eingenommenen Blockierstellung bewegbar ist, und wobei das Blockierelement (41) in der Freigabestellung eine Bewegung eines Abtriebsglied (13) des Klappenantriebs (1) zulässt und in der Blockierstellung das Abtriebsglied (13) in einer Sicherheitsstellung blockiert;
- ein Antriebselement (42), wobei das Antriebselement (42) derart gestaltet ist, dass es bei einer Aktivierung der Blockiervorrichtung (4) das Blockierelement (41) aus der Freigabestellung in die Blockierstellung bewegt;
- ein Aktivierungselement (43), wobei das Aktivierungselement (43) mit dem Blockierelement (41) und dem Antriebselement (42) wirkverbunden ist; und wobei die Aktivierung der Blockiervorrichtung (4) bei Überschreiten einer Blockiertemperatur durch eine irreversible Gestaltänderung des Aktivierungselements (43) erfolgt.

2. Blockiervorrichtung (4) nach Anspruch 1, wobei das Aktivierungselement (43) aus thermoplastischem Kunststoff gefertigt ist.

3. Blockiervorrichtung (4) nach einem der Ansprüche 1 oder 2, wobei das Antriebselement (42) das Blockierelement (41) im Ruhezustand mit einer in Richtung der Blockierstellung wirkenden Antriebskraft beaufschlagt und das Aktivierungselement (43) das Blockierelement (41) im Ruhezustand gegen die Antriebskraft in der Freigabestellung hält.

4. Blockiervorrichtung (4) nach Anspruch 3, wobei das Blockierelement (41) ein blockierelementseitige Formschlusselement (412) aufweist, welches in der Freigabestellung mit einem aktivierungselementseitigen Formschlusselement (431) des Aktivierungselements (43) formschlüssig verbunden ist.

5. Blockiervorrichtung (4) nach einem der Ansprüche 1 bis 4, wobei das Antriebselement (42) eine zwischen dem Blockierelement (41) und einem Stützelement (120) wirkende Feder umfasst.

6. Blockiervorrichtung (4) nach einem der Ansprüche 1 bis 5, wobei das Blockierelement (41) nach seiner Bewegung in die Blockierstellung kraftschlüssig und/oder formschlüssig in der Blockierstellung gesichert wird.

7. Blockiervorrichtung (4) nach einem der Ansprüche 1 bis 6, wobei das Blockierelement (41) in der Blockierstellung einen Anschlag für das Abtriebsglied (13) bildet.

8. Blockiervorrichtung (4) einem der Ansprüche 1 bis 7, wobei das Blockierelement (41) eine drehbar gelagerte Blockierklinke oder einen drehbar gelagerten Blockierhebel umfasst.

9. Blockiervorrichtung (4) nach einem der Ansprüche 1 bis 8, wobei das Abtriebsglied (13) eine drehbar gelagerte und zwischen einer Normalstellung und der Sicherheitsstellung bewegbare Abtriebswelle umfasst.

10. Blockiervorrichtung (4) nach einem der Ansprüche 1 bis 9, wobei das Blockierelement (41) in der Freigabestellung nicht mit dem Abtriebsglied (13) wirkverbunden ist.

11. Blockiervorrichtung (4) nach einem der Ansprüche 1 bis 10, wobei die Blockiertemperatur in einem Bereich von 120°C bis 350°C liegt.

12. Klappenantrieb (1), umfassend ein zur Wirkverbindung mit einer Klappe (2) ausgestaltetem Abtriebsglied (13) und eine Blockiervorrichtung (4) nach einem der Ansprüche 1 bis 11.

13. Klappenantrieb (1) nach Anspruch 12, wobei der Klappenantrieb (1) als motorisierter Klappenantrieb gestaltet ist.

14. Brandschutzeinrichtung, umfassend:
- einen Klappenantrieb (1) nach einem der Ansprüche 12 oder 13;
- eine von einem Abtriebsglied (13) des Klappenantriebs (1) angetriebene Klappe (2);
- einen mit dem Klappenantrieb (1) operativ gekoppelten Auslöser;
wobei der Auslöser den Klappenantrieb (1) derart steuert, dass der Klappenantrieb (1) das Abtriebsglied (13) und die angetriebene Klappe bei Ansprechen aus einer Normalstellung in die Sicherheitsstellung bewegt.

15. Brandschutzeinrichtung nach Anspruch 14, wobei der Auslöser derart ausgelegt ist, dass er im Brandfall vor Erreichen der Blockiertemperatur anspricht.

16. Verfahren zum Betrieb eines Klappenantriebs (1), das Verfahren umfassend:
- Bei Nichtvorliegen eines Brandfalls: Halten eines Abtriebsglieds (13) des Klappenantriebs (1) in einer Normalstellung und Halten eines Blockierelements (41) einer Blockiervorrichtung (4) des Klappenantriebs (1) in einer Freigabestellung;
- Erkennen des Vorliegen eines Brandfalles;
- bei Vorliegen eines Brandfalls: Bewegen des Abtriebsglieds (13) aus der Normalstellung in eine Sicherheitsstellung unter Verbleib des Blockierelements (41) in der Freigabestellung;
- bei Überschreiten einer Blockiertemperatur nach einem Bewegen des Abtriebsglieds (13) in die Sicherheitsstellung: Bewegen des Blockierelements (41) aus der Freigabestellung in eine Blockierstellung, in welcher das Blockierelement (41) das Abtriebsglied (13) in der Sicherheitsstellung blockiert, wobei das Bewegen der Blockierelements (4) durch eine irreversible Gestaltänderung eines Aktivierungselements (41) der Blockiervorrichtung (4) ausgelöst wird.

## Claims

1. Blocking device (4) for a damper drive (1), wherein the blocking device (4) can be transferred by activation from an inactive state to an alternative, activated state, and the blocking device (4) comprises:
- a blocking element (41), wherein the blocking element (41) is movably mounted and as a result can be moved between a release position, assumed in the inactive state, and a blocking position, assumed in the active state, and wherein the blocking element (41) permits a movement of an output member (13) of the damper drive (1) when in the release position and, in the blocking position, blocks the output member (13) in a safety position;
- a drive element (42), wherein the drive element (42) is configured in such a way that it moves the blocking element (41) from the release position to the blocking position when the blocking device (4) is activated;
- an activation element (43), wherein the activation element (43) is operatively connected to the blocking element (41) and the drive element (42); and wherein, when a blocking temperature is exceeded, the blocking device (4) is activated by means of an irreversible shape change of the activation element (43).

2. Blocking device (4) according to Claim 1, wherein the activation element (43) is made of thermoplastic.

3. Blocking device (4) according to either of Claims 1 and 2, wherein the drive element (42) acts on the blocking element (41) in the inactive state with a drive force acting in the direction of the blocking position, and the activation element (43) keeps the blocking element (41) in the inactive state against the drive force in the release position.

4. Blocking device (4) according to Claim 3, wherein the blocking element (41) has a blocking-element side form-fitting element (412), which in the release position is connected in a form-fitting manner to a activation-element-side form-fitting element (431) of the activation element (43).

5. Blocking device (4) according to one of Claims 1 to 4, wherein the drive element (42) comprises a spring acting between the blocking element (41) and a supporting element (120).

6. Blocking device (4) according to one of Claims 1 to 5, wherein the blocking element (41) is secured in the blocking position in a force-fitting and/or form-fitting manner following its movement into the blocking position.

7. Blocking device (4) according to one of Claims 1 to 6, wherein, in the blocking position, the blocking element (41) forms a stop for the output member (13).

8. Blocking device (4) according to one of Claims 1 to 7 wherein the blocking element (41) comprises a rotatably mounted blocking catch or a rotatably mounted blocking lever.

9. Blocking device (4) according to one of Claims 1 to 8, wherein the output member (13) comprises an output shaft that is rotatably mounted and movable between a normal position and the safety position.

10. Blocking device (4) according to one of Claims 1 to 9, wherein the blocking element (41) is not operatively connected to the output member (13) in the release position.

11. Blocking device (4) according to one of Claims 1 to 10, wherein the blocking temperature lies in a range from 120°C to 350°C.

12. Damper drive (1), comprising an output member (13) configured for operative connection to a damper (2) and a blocking device (4) according to one of Claims 1 to 11.

13. Damper drive (1) according to Claim 12, wherein the damper drive (1) is configured as a motorised damper drive.

14. Fire protection unit, comprising:
- a damper drive (1) according to either of Claims 12 and 13;
- a damper (2) driven by an output member (13) of the damper drive (1);
- a trigger operatively coupled to the damper drive (1) ;
wherein the trigger controls the damper drive (1) in such a way that the damper drive (1) moves the output member (13) and the driven damper from a normal position to the safety position in response.

15. Fire protection unit according to Claim 14, wherein the trigger is designed in such a way that, in the event of a fire, it responds before the blocking temperature is reached.

16. Method for operating a damper drive (1), the method comprising:
- in the absence of a fire: holding an output member (13) of the damper drive (1) in a normal position and holding a blocking element (41) of a blocking device (4) of the damper drive (1) in a release position;
- detecting the presence of a fire;
- in the presence of a fire: moving the output member (13) out of the normal position to a safety position, the blocking element (41) remaining in the release position;
- when a blocking temperature is exceeded following a movement of the output member (13) into the safety position: moving the blocking element (41) out of the release position to a blocking position, in which the blocking element (41) blocks the output member (13) in the safety position, wherein the movement of the blocking element (4) is triggered by an irreversible shape change of an activation element (41) of the blocking device (4).

## Revendications

1. Dispositif de blocage (4) pour un entraînement de clapet (1), le dispositif de blocage (4) pouvant être transféré par activation d'un état de repos dans un état activé alternatif et le dispositif de blocage (4) comprenant :
- un élément de blocage (41), l'élément de blocage (41) étant supporté de manière déplaçable et pouvant de ce fait être déplacé entre une position de libération adoptée à l'état de repos et une position de blocage adoptée à l'état activé, et l'élément de blocage (41), dans la position de libération, permettant un mouvement d'un organe de sortie (13) de l'entraînement de clapet (1) et dans la position de blocage, bloquant l'organe de sortie (13) dans une position de sécurité ;
- un élément d'entraînement (42), l'élément d'entraînement (42) étant configuré de telle sorte que lors d'une activation du dispositif de blocage (4), il déplace l'élément de blocage (41) de la position de libération dans la position de blocage ;
- un élément d'activation (43), l'élément d'activation (43) étant en liaison fonctionnelle avec l'élément de blocage (41) et l'élément d'entraînement (42) ; et l'activation du dispositif de blocage (4) s'effectuant lors du dépassement d'une température de blocage par une variation de forme irréversible de l'élément d'activation (43).

2. Dispositif de blocage (4) selon la revendication 1, dans lequel l'élément d'activation (43) est fabriqué en plastique thermoplastique.

3. Dispositif de blocage (4) selon l'une quelconque des revendications 1 ou 2, dans lequel l'élément d'entraînement (42) sollicite l'élément de blocage (41) à l'état de repos avec une force d'entraînement agissant dans la direction de la position de blocage et l'élément d'activation (43) retient l'élément de blocage (41) à l'état de repos à l'encontre de la force d'entraînement dans la position de libération.

4. Dispositif de blocage (4) selon la revendication 3, dans lequel l'élément de blocage (41) présente un élément d'engagement par correspondance de formes (412) du côté de l'élément de blocage qui, dans la position de libération, est connecté par engagement par correspondance de formes avec un élément d'engagement par correspondance de formes (431) de l'élément d'activation (43) situé du côté de l'élément d'activation.

5. Dispositif de blocage (4) selon l'une quelconque des revendications 1 à 4, dans lequel l'élément d'entraînement (42) comprend un ressort agissant entre l'élément de blocage (41) et un élément de support (120).

6. Dispositif de blocage (4) selon l'une quelconque des revendications 1 à 5, dans lequel l'élément de blocage (41), après son déplacement dans la position de blocage, est fixé par engagement par force et/ou par correspondance de formes dans la position de blocage.

7. Dispositif de blocage (4) selon l'une quelconque des revendications 1 à 6, dans lequel l'élément de blocage (41) forme dans la position de blocage une butée pour l'organe de sortie (13).

8. Dispositif de blocage (4) selon l'une quelconque des revendications 1 à 7, dans lequel l'élément de blocage (41) comprend un cliquet de blocage supporté à rotation ou un levier de blocage supporté à rotation.

9. Dispositif de blocage (4) selon l'une quelconque des revendications 1 à 8, dans lequel l'organe de sortie (13) comprend un arbre de sortie supporté à rotation et pouvant être déplacé entre une position normale et la position de sécurité.

10. Dispositif de blocage (4) selon l'une quelconque des revendications 1 à 9, dans lequel l'élément de blocage (41) dans la position de libération n'est pas en liaison fonctionnelle avec l'organe de sortie (13) .

11. Dispositif de blocage (4) selon l'une quelconque des revendications 1 à 10, dans lequel la température de blocage est comprise dans une plage de 120°C à 350°C.

12. Entraînement de clapet (1), comprenant un organe de sortie (13) configuré pour être en liaison fonctionnelle avec un clapet (2) et un dispositif de blocage (4) selon l'une quelconque des revendications 1 à 11.

13. Entraînement de clapet (1) selon la revendication 12, dans lequel l'entraînement de clapet (1) est réalisé sous forme d'entraînement de clapet motorisé.

14. Dispositif ignifuge comprenant :
- un entraînement de clapet (1) selon l'une quelconque des revendications 12 ou 13 ;
- un clapet (2) entraîné par un organe de sortie (13) de l'entraînement de clapet (1) ;
- un dispositif de déclenchement accouplé fonctionnellement à l'entraînement de clapet (1) ;
le dispositif de déclenchement commandant l'entraînement de clapet (1) de telle sorte que l'entraînement de clapet (1) déplace en réponse l'organe de sortie (13) et le clapet entraîné d'une position normale dans la position de sécurité.

15. Dispositif ignifuge selon la revendication 14, dans lequel le dispositif de déclenchement est conçu de manière à réagir en cas d'incendie avant que la température de blocage ne soit atteinte.

16. Procédé pour faire fonctionner un entraînement de clapet (1), le procédé comprenant :
- en l'absence d'un incendie : le maintien d'un organe de sortie (13) de l'entraînement de clapet (1) dans une position normale et le maintien d'un élément de blocage (41) d'un dispositif de blocage (4) de l'entraînement de clapet (1) dans une position de libération ;
- la reconnaissance de la présence d'un incendie ;
- en présence d'un incendie : le déplacement de l'organe de sortie (13) de la position normale dans une position de sécurité alors que l'élément de blocage (41) reste dans la position de libération ;
- en cas de dépassement d'une température de blocage après un déplacement de l'organe de sortie (13) dans la position de sécurité : le déplacement de l'élément de blocage (41) de la position de libération dans une position de blocage dans laquelle l'élément de blocage (41) bloque l'organe de sortie (13) dans la position de sécurité, le déplacement de l'élément de blocage (4) étant déclenché par une variation de forme irréversible d'un élément d'activation (41) du dispositif de blocage (4).
